# EUROPÄISCHE PATENTANMELDUNG

(11) **EP 1 350 710 A1**
(43) Veröffentlichungstag der Anmeldung: **08.10.2003**
(21) Anmeldenummer: 03002357.6
(22) Anmeldetag: 04.02.2003
(51) Int. Cl.: B62D 25/08

(54) **Tragstruktur eines Kraftfahrzeugs**

(30) Priorität: 27.02.2002 DE 10208512
(71) Anmelder: DaimlerChrysler AG, 70567 Stuttgart (DE)
(72) Erfinder: Boulay, Olivier, Tokyo, 158-0095 (JP); Fussnegger, Wolfgang, 72074 Tübingen (DE); Wunderlich, Hans-Peter, 73760 Ostfildern (DE)

(57) **Zusammenfassung**

Die Erfindung betrifft eine Tragstruktur eines Kraftfahrzeugs, insbesondere eines Personenkraftwagens, mit einem Boden (2), der bezüglich der Fahrzeuglängsrichtung (3) in eine nach oben ragende Stirnwand (4) übergeht, und mit einem Anbau, der mit Längsträgern (7) an der Stirnwand (4) befestigt ist.

Eine vereinfachte Herstellung der Tragstruktur wird dadurch ermöglicht, dass die Längsträger (7) als Profile mit in ihrer Längsrichtung (8) konstantem Querschnitt ausgebildet sind, deren Profillängsrichtung (8) gegenüber der Fahrzeuglängsrichtung (3) geneigt ist.

## Beschreibung

Die Erfindung betrifft eine Tragstruktur eines Kraftfahrzeugs, insbesondere eines Personenkraftwagens, mit den Merkmalen des Oberbegriffs des Anspruchs 1 bzw. mit den Merkmalen des Oberbegriffs des Anspruchs 2.

Eine derartige Tragstruktur ist beispielsweise aus der DE 199 17 177 bekannt und weist einen Boden auf, der bezüglich der Fahrzeuglängsrichtung vorn in eine nach oben ragende vordere Stirnwand übergeht und bezüglich der Fahrzeuglängsrichtung hinten in eine nach oben ragende hintere Stirnwand übergeht. Die bekannte Tragstruktur weist außerdem einen vorderen Anbau auf, der mit vorderen Längsträgern an der vorderen Stirnwand befestigt ist. Desweiteren besitzt die Tragstruktur einen hinteren Anbau, der mit hinteren Längsträgern an der hinteren Stirnwand befestigt ist.

Die Gestaltung von Tragstrukturen ist aufwendig, da oft einander widerstrebende Anforderungen berücksichtigt werden müssen. Einerseits müssen hinreichende Crash- und Betriebsfestigkeiten gewährleistet werden. Anderseits muss die Tragstruktur nach außen eher klein bauen und nach innen einen relativ großen Fahrzeuginnenraum ermöglichen. Insbesondere im Motorraum gestaltet sich der Aufbau der Tragstruktur, insbesondere der zugehörigen vorderen bzw. hinteren Längsträger besonders kompliziert. In entsprechendem Maße werden auch die zur Herstellung der Tragstruktur benötigten Werkzeuge aufwendig und teuer.

Aus der EP 0 538 679 B1 ist eine selbsttragende formsteife Fahrgastzelle eines Personenkraftwagens bekannt, die aus extrudierten Profilen zusammengebaut ist, deren Profillängsrichtungen parallel zur Fahrzeuglängsrichtung verlaufen.

Aus der EP 0 622 289 B1 ist es bekannt, Seitenwandabschnitte einer Fahrgastzelle bei einem Personenkraftwagen als Strangpressprofile auszubilden, deren Profillängsrichtung parallel zur Fahrzeuglängsrichtung verläuft.

Die vorliegende Erfindung beschäftigt sich mit dem Problem, für eine Tragstruktur der eingangs genannten Art eine verbesserte Ausführungsform anzugeben, die insbesondere preiswerter herstellbar ist.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Längsträger als Profile mit in ihrer Längsrichtung konstantem Querschnitt auszubilden, derart, dass deren Profillängsrichtung gegenüber der Fahrzeuglängsrichtung geneigt verläuft. Durch diese Bauweise können die Längsträger erheblich besser an die Steifigkeitsanforderungen der Tragstruktur angepasst werden. Darüber hinaus kann durch die vorgeschlagene Neigung der Profillängsrichtung gegenüber der Fahrzeuglängsrichtung die Montage des jeweiligen Längsträger an der Stirnwand und/oder am Anbau vereinfacht werden, indem der jeweilige Profilabschluss in einer geeigneten Weise geformt wird.

Zweckmäßig können die Längsträger als Strangpressprofile oder Strangzugprofile oder Extrusionsprofile oder Pulltrusionsprofile oder Walzprofile ausgebildet sein.

Besonders zweckmäßig ist eine Ausführungsform, bei der die Profillängsrichtung der Längsträger jeweils parallel zur Stirnwand oder zu einer an der Stirnwand zur Anbindung des jeweiligen Längsträgers ausgebildeten Anbindungszone der Stirnwand verläuft. Durch diese Maßnahme kann die Formgebung des der Stirnwand zugewandten Profilabschlusses besonders leicht dahingehend geformt werden, dass sich die Montage des Längsträgers an der Stirnwand vereinfacht.

Bei einer anderen Ausführungsform können die Längsträger vom Anbau zur Stirnwand eine zunehmende Breite und/oder eine zunehmende Wanddicke aufweisen. Bei dieser Ausgestaltung kann die energieabsorbierende Wirkung der Längsträger im Crashfall optimiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf einen Ausschnitt einer erfindungsgemäßen Tragstruktur bei einer ersten Ausführungsform,
- Fig. 2: einen Schnitt durch einen Längsträger bei einer zweiten Ausführungsform,
- Fig. 3: einen Schnitt durch einen Längsträger bei einer dritten Ausführungsform,
- Fig. 4: eine Seitenansicht auf die Tragstruktur bei einer vierten Ausführungsform,
- Fig. 5: einen Schnitt durch den Längsträger entsprechend den Schnittlinien V in Fig. 4,
- Fig. 6: eine perspektivische Ansicht auf eine andere Ausführungsform und
- Fig. 7: einen Schnitt durch eine Stirnwand bei einer weiteren Ausführungsform.

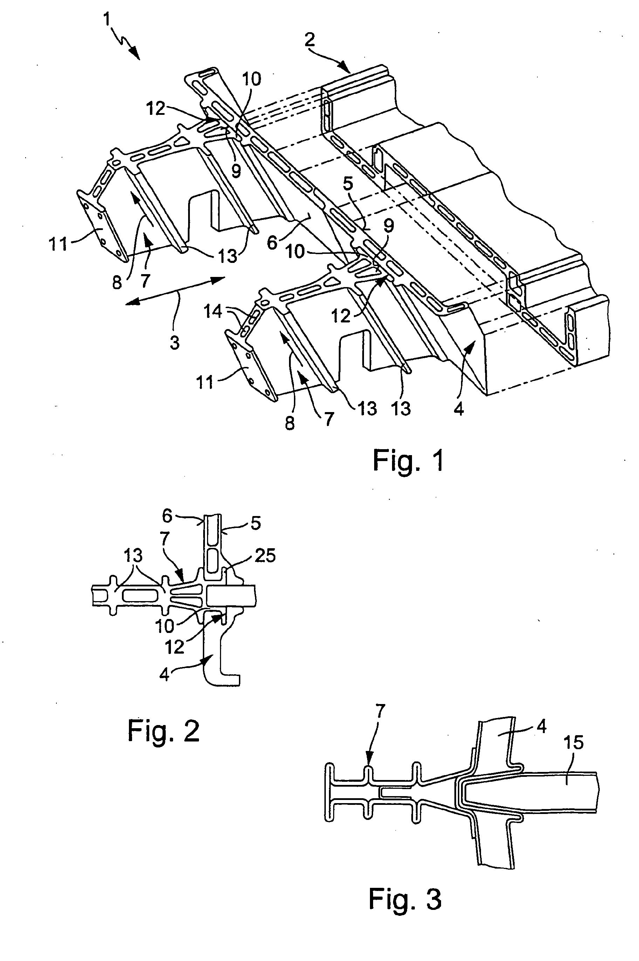

Entsprechend Fig. 1 besitzt eine Tragstruktur 1 eines Kraftfahrzeugs, insbesondere eines Personenkraftwagens, einen Boden 2, der selbsttragend ausgebildet sein kann. Der Boden 2 besteht bei der hier gezeigten Ausführungsform aus einem oder aus mehreren Strangpressprofilen, deren Profillängsrichtung parallel zu einer durch einen Doppelpfeil symbolisierten Fahrzeuglängsrichtung 3 verläuft. Der Boden 2 geht an einem axialen Ende in eine nach oben ragende Stirnwand 4 über, die hier an den Boden 2 angesetzt und z.B. über Schweißnähte damit verbunden ist. Bei der in Fig. 1 gezeigten Ausführungsform ist auch diese Stirnwand 4 aus zwei Strangpressprofilen gebildet, deren Profillängsrichtung nach oben ragt.

Üblicherweise trägt der Boden 2 eine Fahrgastzelle. Dementsprechend besitzt die Stirnwand 4 eine dem Boden 2 zugewandte Innenseite 5 und eine vom Boden 2 abgewandte Außenseite 6. Auf dieser Außenseite 6 sind an der Stirnwand 4 zwei Längsträger 7 befestigt, die sich in Fahrzeuglängsrichtung 3 erstrecken. Mit Hilfe dieser Längsträger 7 kann ein hier nicht dargestellter Anbau an der Stirnwand 4 und somit am Boden 2 befestigt werden.

Bei den hier gezeigten Ausführungsformen handelt es sich bei der Stirnwand 4 um eine an einem bezüglich der Fahrtrichtung des Fahrzeugs vorderen Ende des Bodens 2 angebrachte vordere Stirnwand 4. Über die vorderen Längsträger 7 ist dann ein vorderer Anbau, z.B. ein Frontend, an der Stirnwand 4 abgestützt. Bei der Tragstruktur 1 kann jedoch zusätzlich oder alternativ auch an einem bezüglich der Fahrtrichtung des Fahrzeugs hinteren Ende in entsprechender Weise eine hintere Stirnwand 4 ausgebildet sein, an der über hintere Längsträger 7 ein hinterer Anbau, z.B. ein Heckend, befestigt ist.

Erfindungsgemäß sind die Längsträger 7 als Profile ausgebildet, die in ihrer durch einen Pfeil 8 symbolisierten Profillängsrichtung einen konstanten Querschnitt aufweisen. Von besondere Bedeutung ist hierbei, dass die Profillängsrichtung 8 bei jedem Längsträger 7 gegenüber der Fahrzeuglängsrichtung 3 geneigt verläuft, obwohl die Fahrzeuglängsrichtung 3 die Haupterstreckungsrichtung der Längsträger 7 ist. Die Haupterstreckungsrichtung ist dabei diejenige Richtung, in der die Längsträger 3 ihre größte Ausdehnung haben, also hier die Fahrzeuglängsrichtung 3.

Wie aus Fig. 1 hervorgeht, sind die Längsträger 7 so geformt, dass ihre Profillängsrichtung 8 jeweils in einer Ebene liegt, die sich in der Fahrzeuglängsrichtung 3 und in der Höhenrichtung des zugehörigen Längsträgers 7, also insbesondere vertikal erstreckt. Die Profillängsrichtungen 8 verlaufen somit von unten nach oben bzw. vice versa. Entsprechend der hier gezeigten besonders vorteilhaften Ausführungsform verlaufen die Profillängsrichtungen 8 hier parallel zur Stirnwand 4. Die Stirnwand 4 weist zur Anbindung der Längsträger 7 jeweils eine, vorzugsweise ebene, Anbindungszone 9 auf, die sich parallel zur Profillängsrichtung 8 des jeweiligen Längsträgers 7 erstreckt. Für die Neigung der Profillängsrichtung 8 gegenüber der Fahrzeuglängsrichtung 3 sind Winkel zwischen 60° und 90° Grad zweckmäßig.

Jeder Längsträger 7 weist einen der Stirnwand 4 zugewandten Profilabschluss 10 auf, der im folgenden auch als hinterer Profilabschluss 10 bezeichnet wird. In entsprechender Weise besitzt jeder Längsträger 7 außerdem einen von der Stirnwand 4 abgewandten Profilabschluss 11, der in folgendem auch als vorderer Profilabschluss 11 bezeichnet wird. Die Profilabschlüsse 10 und 11 sind hier jeweils als Befestigungsplatte ausgebildet, die jeweils mit einer ebenen Außenseite ausgestattet sind. Die Stirnwand 4 ist im Bereich der Anbindungszonen 9 jeweils mit einem Anschlussflansch 12 ausgestattet, der komplementär zum hinteren Profilabschluss 10 ausgebildet ist. In entsprechender Weise ist auch der nicht gezeigte Anbau mit einem komplementär zum vorderen Profilabschluss 11 ausgebildeten Anschlussflansch ausgestattet. Gemäß Fig. 1 kann der jeweilige Anschlussflansch 12 der Stirnwand 4 durch eine auf der Außenseite 6 ausgebildete Nut realisiert sein, in welche die Befestigungsplatte 10, also der hintere Profilabschluss 10, einsetzbar ist und darin seitlich formschlüssig gesichert ist. Die Befestigung der Längsträger 7 an der Stirnwand 4 kann dann in herkömmlicher Weise erfolgen, z.B. durch Verkleben, Verlöten, Verschweißen, Verschrauben und/oder Vernieten.

Durch die ebene Außenseite des hinteren Profilabschlusses 10 kann sich dieser bzw. die dadurch gebildete Befestigungsplatte relativ großflächig an der Stirnwand 4 abstützen. Von besonderem Vorteil ist eine Ausführungsform, bei der die durch den Profilabschluss 10 gebildete Befestigungsplatte in Fahrzeugquerrichtung breiter ausgebildet ist als daran angrenzende Abschnitte des Längsträgers 7.

Gemäß Fig. 2 kann der jeweilige Anschlussflansch 12 der Stirnwand 4 auch als Nut mit einem Hinterschnitt 25 ausgebildet sein, in welche der komplementäre Profilabschluss 10 des Längsträgers 7 nur noch in Längsrichtung der Nut bzw. in der damit zusammenfallenden Profillängsrichtung 8 einsteckbar ist. Insbesondere in Fahrzeuglängsrichtung 3 und quer dazu ergibt sich dann eine besonders wirksame formschlüssige Verbindung zwischen Längsträger 7 und Stirnwand 4. Dementsprechend bilden die Befestigungsplatte 10 und der zugehörige Anschlussflansch 12 einen Nut-Feder-Anordnung.

Entsprechend Fig. 1 besitzen die Längsträger 7 jeweils wenigstens eine, hier zwei Befestigungsleisten 13, die quer zur Fahrzeuglängsrichtung 3 auf jeder Seite des zugehörigen Längsträgers 7 nach außen abstehen. Von besonderer Bedeutung ist hierbei, dass diese Befestigungsleisten 13 als durchgehende Stege in das Profil des jeweiligen Längsträgers 7 integriert sind. Das heißt, das Profil ist im Bereich der Befestigungsleisten 13 als Vollprofil ausgestaltet. Diese Befestigungsleisten 13 dienen beispielsweise zur Anbindung von Achs- und/oder Federungskomponenten einer Fahrzeugachse und/oder zur Anbindung bzw. Lagerung von Lenkungskomponenten oder dergleichen.

Durch die erfindungsgemäße Ausgestaltung der Längsträger 7 als Profile, ist es besonders einfach möglich, die Längsträger 7 so auszubilden, dass sie in Fahrzeuglängsrichtung 3 von der Stirnwand 4 zum Anbau eine abnehmende, quer zur Fahrzeuglängsrichtung 3 gemessene Breite und/oder eine abnehmende Wanddicke aufweisen. Hierdurch kann für die Längsträger 7 eine für den Crashfall optimierte Versagenscharakteristik realisiert werden.

Wie aus den Figuren hervorgeht, können die Profile der Längsträger 7 eine oder mehrere Hohlräume oder Kammern 14 enthalten, wodurch die Längsträger 7 leicht bauen.

In Fig. 3 ist exemplarisch eine Ausführungsform dargestellt bei der die Längsträger 7 als Walzprofile ausgebildet sind. Bei den anderen Ausführungsformen sind die Längsträger 7 als Strangpressprofile oder Strangzugprofile oder Extrusionsprofile oder Pulltrusionsprofile ausgebildet. Die Herstellung derartige Profile ist vergleichsweise preiswert.

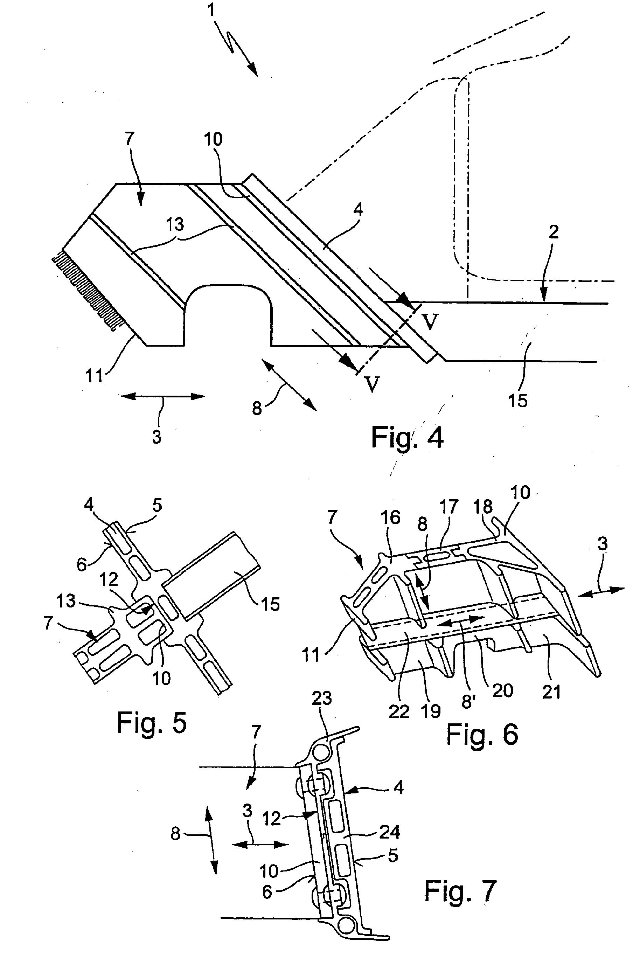

In Fig. 4 ist eine andere Ausführungsform gezeigt, bei der die Stirnwand 4 und die Profillängsrichtungen 8 um etwa 45° gegenüber der Fahrzeuglängsrichtung 3 geneigt sind. Durch die Variation der Neigung kann das Crashverhalten des Fahrzeugs optimiert werden.

Bei den Ausführungsformen 3 bis 5 sind die Längsträger 7 quer zur Fahrzeuglängsrichtung 3 soweit außen an der Stirnwand 4 angeordnet, dass sie mit Längsträgern 15 fluchten, die sich auf der Innenseite 5 der Stirnwand 4 an der Stirnwand 4 abstützen. Bei diesen Längsträgern 15 handelt es sich um seitliche Längsträger 15 des Bodens 2, die im Türbereich auch als Schweller bezeichnet werden. Durch diese fluchtende Anordnung kann im Crashfall eine direkte Kraftübertragung von den Längsträgern 7 des Anbaus auf die seitlichen Längsträger 15 des Bodens 2 erreicht werden.

Entsprechend Fig. 6 können die Längsträger 7 bei einer besonderen Ausführungsform aus mehreren Teilprofilen 16, 17, 18, 19, 20, 21, 22 zusammengebaut sein. Durch diese Maßnahme können zum einen die Wanddicken der einzelnen kleineren Teilprofile 16 bis 22 kleiner gewählt werden. Zum anderen kann dadurch bei einem Strangpressverfahren die Pressgeschwindigkeit erhöht werden, wodurch sich die einzelnen Teilprofile 16 bis 22 preiswerter herstellen lassen als ein einzelnes großes Profil. Desweiteren kann bei einem derartigen gebauten Längsträger 7 die Anordnung der Teilprofile 16 bis 22 so gewählt werden, dass bei wenigstens zwei benachbarten Teilprofilen 16 bis 22 deren Profillängsachsen 8 zueinander versetzt sind, z.B. um 45° bis 90°. Gemäß Fig. 6 ist das mittlere Teilprofil 22 so orientiert, dass seine Profillängsrichtung 8 parallel zur Fahrzeuglängsrichtung 3 verläuft, während die Profillängsrichtungen 8 der anderen Teilprofile 16 bis 21 die Profillängsrichtung 8 des Trägers 7 bilden.

Entsprechend Fig. 7 kann bei einer besonderen Ausführungsform auch die Stirnwand 4 mehrteilig ausgebildet sein. Gemäß Fig. 7 ist die Stirnwand 4 dabei quer zur Fahrzeuglängsrichtung geteilt, so dass die Stirnwand 4 aus einer dem Anbau zugewandten Außenschale 23 und einer dem Boden 2 zugewandten Innenschale 24 zusammengebaut ist. Dabei kann z.B. die Außenschale 23 zweiteilig ausgestaltet sein. Die Stirnwand 4 bzw. deren Außenschale 23 und deren Innenschale 24 sind bei der Ausführungsform gemäß Fig. 7 ebenfalls als Profile mit konstantem Querschnitt, z.B. Strangpressprofile, ausgebildet, wobei sich die Profillängsrichtungen hier quer zur Fahrzeuglängsrichtung 3 erstrecken.

Durch diese Ausgestaltungsform kann die Außenschale 23 der Stirnwand 4 im Rahmen der Vormontage des Anbaus an den Längsträgern 7 des Anbaus befestigt werden. Ebenso ist es möglich, die Innenschale 24 im Rahmen einer Vormontage der Fahrgastzelle mit dem Boden 2 zu verbinden. Die Endmontage, bei der der vormontierte Anbau und die vormontierte Fahrgastzelle zusammengebaut werden, gestaltet sich dadurch besonders einfach, da die Schalen 23 und 24 der Stirnwand 4 eine relativ einfach koppelbare Schnittstelle bilden. Bei der Montage des Anbaus an der Fahrgastzelle wird dann die Stirnwand 4 komplettiert bzw. zusammengebaut.

## Patentansprüche

1. Tragstruktur eines Kraftfahrzeugs, insbesondere eines Personenkraftwagens, mit einem Boden (2), der bezüglich der Fahrzeuglängsrichtung (3) vorn in eine nach oben ragende vordere Stirnwand (4) übergeht, und mit einem vorderen Anbau, der mit vorderen Längsträgern (2) an der Stirnwand (4) befestigt ist,
**dadurch gekennzeichnet, dass** die Längsträger (7) als Profile mit in ihrer Längsrichtung (8) konstantem Querschnitt ausgebildet sind, deren Profillängsrichtung (8) gegenüber der Fahrzeuglängsrichtung (3) geneigt ist.

2. Tragstruktur eines Kraftfahrzeugs, insbesondere eines Personenkraftwagens, insbesondere nach Anspruch 1, mit einem Boden (2), der bezüglich der Fahrzeuglängsrichtung (3) hinten in eine nach oben ragende hintere Stirnwand (4) übergeht, und mit einem hinteren Anbau, der mit hinteren Längsträgern (7) an der Stirnwand (4) befestigt ist,
**dadurch gekennzeichnet, dass** die Längsträger (7) als Profile mit in ihrer Längsrichtung (8) konstantem Querschnitt ausgebildet sind, deren Profillängsrichtung (8) gegenüber der Fahrzeuglängsrichtung (3) geneigt ist.

3. Tragstruktur nach Anspruch 1 oder 2,
**dadurch gekennzeichnet, dass** die Längsträger (7) als Strangpressprofil oder Strangzugprofil oder Extrusionsprofil oder Pulltrusionsprofil oder Walzprofil ausgebildet sind.

4. Tragstruktur nach einem der Ansprüche 1 bis 3,
**dadurch gekennzeichnet, dass** die Profillängsrichtung (8) eines der Längsträger (7) in einer Ebene liegt, die sich in Fahrzeuglängsrichtung (3) und in Höhenrichtung des jeweiligen Längsträgers (7) erstreckt.

5. Tragstruktur nach einem der Ansprüche 1 bis 4,
**dadurch gekennzeichnet, dass** die Profillängsrichtung (8) der Längsträger (7) jeweils parallel zur Stirnwand (4) oder zu einer an der Stirnwand (4) zur Anbindung des jeweiligen Längsträgers (7) ausgebildeten Anbindungszone (9) der Stirnwand (4) verläuft.

6. Tragstruktur nach einem der Ansprüche 1 bis 5, dass die Profillängsrichtung (8) etwa 60° bis 90° gegenüber der Fahrzeuglängsrichtung (3) geneigt it.

7. Tragstruktur nach einem der Ansprüche 1 bis 6,
**dadurch gekennzeichnet, dass** ein der Stirnwand (4) zugewandter Profilabschluss (10) und/oder ein von der Stirnwand (4) abgewandter Profilabschluss (11) als Befestigungsplatte ausgebildet ist/sind.

8. Tragstruktur nach Anspruch 7,
**dadurch gekennzeichnet, dass** die Stirnwand (4) und/oder der Anbau einen zur jeweiligen Befestigungsplatte (10, 11) komplementären Anschlussflansch (12) aufweist/aufweisen.

9. Tragstruktur nach Anspruch 8,
**dadurch gekennzeichnet, dass** die jeweilige Befestigungsplatte (10, 11) und der zugeordnete Anschlussflansch (12) als Nut-Feder-Anordnung ausgebildet sind.

10. Tragstruktur nach einem der Ansprüche 7 bis 9,
**dadurch gekennzeichnet, dass** die der Stirnwand (4) zugeordnete Befestigungsplatte (10) des Längsträgers (7) relativ großflächig an der Stirnwand (4) abgestützt ist.

11. Tragstruktur nach Anspruch 10,
**dadurch gekennzeichnet, dass** die Befestigungsplatte (10) breiter ausgebildet ist als daran angrenzende Abschnitte des Längsträgers (7).

12. Tragstruktur zumindest nach Anspruch 8,
**dadurch gekennzeichnet, dass** die jeweilige Befestigungsplatte (10, 11) und der zugeordnete Anschlussflansch (12) als Steckverbindung ausgebildet sind, deren Steckrichtung parallel zur Profillängsrichtung (8) des zugehörigen Längsträgers (7) verläuft.

13. Tragstruktur nach einem der Ansprüche 1 bis 12,
**dadurch gekennzeichnet, dass** der Längsträger (7) vom Anbau zur Stirnwand (4) eine zunehmende Breite und/oder eine zunehmende Wanddicke aufweist.

14. Tragstruktur nach einem der Ansprüche 1 bis 13,
**dadurch gekennzeichnet, dass** die Profile ein- oder mehrkammerig ausgebildet sind.

15. Tragstruktur nach einem der Ansprüche 1 bis 14,
**dadurch gekennzeichnet, dass** der Boden (2) seitliche Längsträger (15) aufweist, die sich an der Innenseite (5) der Stirnwand abstützen, wobei die Längsträger (7) des Anbaus so an der Stirnwand (4) angeordnet sind, dass sie sich im Bereich der seitlichen Längsträger (15) des Bodens (2) an der Außenseite (6) der Stirnwand (4) abstützen.

16. Tragstruktur nach einem der Ansprüche 1 bis 15,
**dadurch gekennzeichnet, dass** der Längsträger (7) wenigstens eine nach außen abstehende Befestigungsleiste (13) aufweist, die in das Profil als durchgehender Steg integriert ist.

17. Tragstruktur nach einem der Ansprüche 1 bis 16,
**dadurch gekennzeichnet, dass** die Stirnwand (4) mehrteilig ausgebildet ist.

18. Tragstruktur nach Anspruch 17,
**dadurch gekennzeichnet, dass** die Stirnwand (4) quer zur Fahrzeuglängsrichtung (3) geteilt ist und aus einer dem Anbau zugewandten Außenschale (23) und einer vom Anbau abgewandten Innenschale (24) zusammengebaut ist.

19. Tragstruktur nach Anspruch 18,
**dadurch gekennzeichnet, dass** die Außenschale (23) der Stirnwand (4) am vormontierten Anbau befestigt ist, dass die Innenschale (24) der Stirnwand (4) an einer den Boden (2) aufweisenden vormontierten Fahrgastzelle befestigt ist und dass die Stirnwand (4) durch die Montage des Anbaus an der Fahrgastzelle zusammengebaut ist.

20. Tragstruktur nach einem der Ansprüche 1 bis 19,
**dadurch gekennzeichnet, dass** die Stirnwand (4) als ein- oder mehrteiliges Profil mit in seiner Längsrichtung konstantem Querschnitt ausgebildet ist, wobei die Profillängsrichtung quer zur Fahrzeuglängsrichtung (3) und horizontal verläuft.

21. Tragstruktur nach einem der Ansprüche 1 bis 20,
**dadurch gekennzeichnet, dass** der Längsträger (7) aus mehreren Teilprofilen (16 bis 22) zusammengebaut.

22. Tragstruktur nach Anspruch 21,
**dadurch gekennzeichnet, dass** bei wenigstens zwei benachbarten Teilprofilen (16 bis 22) die Profillängsrichtung (8), insbesondere um 45° bis 90° zueinander geneigt sind.
